# EUROPÄISCHE PATENTSCHRIFT

(11) **EP 0 876 216 B1**
(45) Veröffentlichungstag und Bekanntmachung des Hinweises auf die Patenterteilung: **05.04.2000**
(21) Anmeldenummer: 96929296.0
(22) Anmeldetag: 21.08.1996
(51) Int. Cl.: B01J 35/04, F01N 3/28

(54) **SCHICHTARTIG AUFGEBAUTE BLECHE MIT AUFGEWALZTEM LOTMATERIAL UND VERFAHREN ZUM HERSTELLEN EINES WABENKÖRPERS DARAUS**
LAYERED SHEET METAL WITH ROLLED-ON SOLDER AND PROCESS FOR MANUFACTURING A HONEYCOMBED BODY THEREFROM
TOLES DE CONSTRUCTION LAMELLAIRE DOTEES D'UN MATERIAU DE SOUDURE APPLIQUE PAR LAMINAGE ET PROCEDE POUR FABRIQUER UN CORPS A NIDS D'ABEILLES A PARTIR DUDIT PRODUIT

(30) Priorität: 22.08.1995 DE 19530835
(43) Veröffentlichungstag der Anmeldung: 11.11.1998
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE); BODE, Hans, D-42897 Remscheid (DE); WIERES, Ludwig, D-51491 Overath (DE)
(74) Vertreter: Kahlhöfer, Hermann, Dipl.-Phys.
(86) Internationale Anmeldenummer: EP9603675
(87) Internationale Veröffentlichungsnummer: WO9707889

(56) Entgegenhaltungen:
- EP-A- 0 159 468
- EP-A- 0 263 324
- EP-A- 0 590 171
- EP-A- 0 653 264

## Beschreibung

Die Erfindung bezieht sich auf ein Verfahren zum Herstellen eines Wabenkörpers, bei dem Metallblechlagen gestapelt und/oder gewickelt werden, die zumindest teilweise eine Struktur zur Bildung von für ein Fluid durchströmbaren Kanälen aufweisen. Insbesondere bezieht sich die Erfindung auch auf geschichtete Metallbleche mit einer äußeren Aluminiumschicht zur Herstellung solcher Wabenkörper, die vor allem in Abgasreinigungsanlagen von Kraftfahrzeugen Anwendung finden.

Ein Wabenkörper der vorstehend genannten Art ist beispielsweise durch die WO 89/07488 bekannt. Der Wabenkörper dient als Träger eines Katalysators, der die Umsetzung von Komponenten eines Abgases, insbesondere eines Abgases aus einem Verbrennungsmotor, in weniger umweltbelastende Verbindungen begünstigt. Die Wabenkörper sind hohen mechanischen und thermischen Belastungen ausgesetzt. Neben den mechanischen und thermischen Belastungen sind die Metallbleche einer die Korrosion fördernden Atmosphäre ausgesetzt. Es ist daher wünschenswert, zur Herstellung eines Wabenkörpers Metallbleche mit hoher Korrosionsbeständigkeit zu verwenden.

Durch die US 5,366,139 ist es bekannt, für Wabenkörper Metallbleche zu verwenden, die zunächst aus einem geschichteten Material bestehen. Solche Bleche weisen mindestens eine Schicht aus Chrom enthaltendem Stahl und mindestens eine im wesentlichen Aluminium enthaltende Schicht auf. Ein solches geschichtetes Blech wird einer Wärmebehandlung unterzogen, wobei das Blech weitgehend homogenisiert wird. Unter Homogenisierung des Bleches wird eine Diffusion des Aluminiums in den Stahl verstanden, so daß im wesentlichen ein einschichtiges Blech aus Stahl mit Aluminium entsteht.

Aus der DE-OS 29 24 592 sind verschiedene Verfahren zum Aufbringen von Lotmaterial auf solche Bleche bzw. daraus hergestellte Wabenkörper bekannt. Alle diese Verfahren erfordern einen erheblichen Aufwand und zusätzliche Fertigungsschritte.

Der vorliegenden Erfindung liegt die Aufgabe zugrunde, ein Verfahren zum Herstellen eines Wabenkörpers anzugeben, das möglichst wenige Fertigungsschritte enthält, aber trotzdem zu einem korrosionsbeständigen und mechanisch belastbaren Wabenkörper führt. Außerdem soll ein geeignetes Metallblech aus Verbundmaterial zur Herstellung solcher Körper geschaffen werden.

Diese Aufgabe wird durch ein Verfahren zum Herstellen eines Wabenkörpers mit den Merkmalen des Anspruchs 1, bzw. durch ein Metallblech mit den Merkmalen des Anspruchs 8 gelöst. Vorteilhafte Weiterbildungen sind Gegenstand der jeweils abhängigen Ansprüche.

Bei der Herstellung eines erfindungsgemäßen Bleches wird gleichzeitig mit dem Zusammenwalzen der tragenden Metallschichten auch das zur späteren äußeren Verbindung benötigte Lotmaterial aufgewalzt. Damit entfallen aufwendige Fertigungsschritte, die mit dem späteren Aufbringen und Fixieren von Lot zu tun haben. Der Wabenkörper braucht nur noch gewickelt oder geschichtet zu werden und kann anschließend dem Lötprozeß zugeführt werden. Das Aufbringen von Lotmaterial bei einem Walzprozeß, bei dem ohnehin verschiedene Schichten zusammengewalzt werden, ist weit weniger aufwendig als das spätere Beloten der Bleche oder Wabenkörper.

Aus dem Stand der Technik sind verschiedene Arten der Belotung und der Anordnung von Lötverbindungen eines Wabenkörpers bekannt. Durch streifenweises Anordnen des Lotmaterials auf der Oberfläche der Bleche können fast alle gewünschten Konfigurationen der späteren Lötstellen erreicht werden. Bevorzugt werden Streifen einer Breite von 2 bis 10 mm, insbesondere etwa Smm. Je nach Bautyp können die Streifen auf einer oder beiden Seiten und an einem oder beiden Rändern angeordnet sein. Es ist insbesondere auch möglich, nur die Hälfte der Blechlagen für einen Wabenkörper, insbesondere glatte Blechlagen, mit Lotschichten zu versehen, während die übrigen Bleche ohne Lotmaterial hergestellt werden.

Bei der besonders vorteilhaften Verwendung von Nickelbasislot für die Lotmaterialstreifen können diese beim gemeinsamen Walzvorgang mit dem Aufwalzen von Aluminiumschichten aufgebracht werden, wobei sich das relativ härtere Nickelmaterial in die Aluminiumschicht drückt, so daß trotz der Streifen eine nahezu erhebungsfreie Oberfläche entsteht. Es können dabei Lotfolien oder auch Lotdraht oder aufgestreutes Lotpulver verwendet werden. Bei der Verwendung von Lotdraht kann dieser, abhängig von der Wahl des Lotmaterials, der Walzenkonfiguration und der Art der Prozeßführung, beim Einwalzen nur leicht plattgedrückt oder zu breiten Streifen verformt werden.

Herkömmlich aufgetragene Lotschichten von beispielsweise einer lokalen Dicke von mehr als 10 µ führen u.U. zur mechanischen Instabilität eines Wabenkörpers, da das Lot beim Lötvorgang verfließt und sich vorher unter Spannung gesetzte Wabenkörper auf diese Weise entspannen können. Dagegen braucht die Lotdicke bei dem fertigen gewalzten Blech beispielsweise nur etwa 0,5 bis 3 µ zu betragen.

Wegen der Reduzierung der Anzahl der Verfahrensschritte ermöglicht die vorliegende Erfindung eine kostengünstigere Produktion der geschichteten und mit Lot versehenen Bleche, insbesondere eine kostengünstige Produktion breiter Blechstreifen. Die für Wabenkörper benötigten Blechstreifen werden unter Umständen in unterschiedlicher Breite daraus geschnitten. Daher ist beim Einwalzen des Lotes auf geeigneten Abstand der Lotstreifen zu achten, um überflüssigen Verschnitt zu vermeiden.

Durch die Verfahrensführung und die Verwendung eines geschichteten Materials, welches mindestens eine Schicht aus Chrom enthaltendem Stahl und mindestens eine im wesentlichen Aluminium enthaltende Schicht aufweist, kann das Lotmaterial ein Nickelbasislot sein, wobei die maximale Löttemperatur bei 1100 bis 1150 °C beträgt. Vorzugsweise enthält das Lotmaterial zwischen 0,5 und 8 % Bor, insbesondere 3 bis 6 % Bor. Bor im Lotmaterial dient als Diffusionsbeschleuniger, so daß eine zeitliche Verkürzung des Lötprozesses bei gleichwertigen Lötverbindungen erreicht wird. Eine Verkürzung des Lötprozesses hat zur Folge, daß höhere Durchlaufraten durch einen Lötofen ermöglicht werden. Durch den erreichbaren hohen Aluminiumgehalt der homogenisierten Bleche können nachteilige Eigenschaften des Boranteils für die Korrosionsbeständigkeit des geschichteten Materials ausgeglichen werden.

Insbesondere ist es vorteilhaft, daß die Wärmebehandlung zunächst in einem Temperaturbereich durchgeführt wird, in dem das Lotmaterial noch nicht schmilzt. Nach einer weitgehenden Homogenisierung der geschichteten Bleche wird die Temperatur bis zu der Schmelztemperatur des Lotmaterials erhöht. Diese Verfahrensführung hat den Vorteil, daß sichergestellt wird, daß eine weitgehende Homogenisierung der geschichteten Bleche erreicht und dann eine haltbare Lötverbindung geschaffen wird.

Weitere Vorteile und Merkmale des erfindungsgemäßen Verfahrens werden anhand der Zeichnung näher erläutert. Es zeigen:
- Fig. 1: schematisch einen Wabenkörper im Querschnitt, gemäß dem Stand der Technik,
- Fig. 2: ein Metallblech aus einem geschichtetem Material mit einer Lotschicht,
- Fig. 3: ein Metallblech aus einem geschichtetem Material mit mehreren eingewalzten Lotstreifen in schematisch perspektivischer Sicht und
- Fig. 4: ein Metallblech aus einem geschichteten Material mit drei Schichten, davon einer Lotschicht.

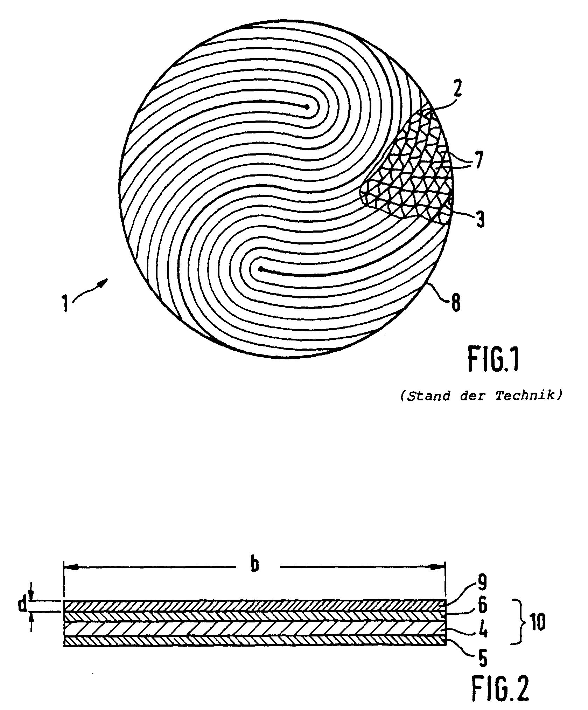

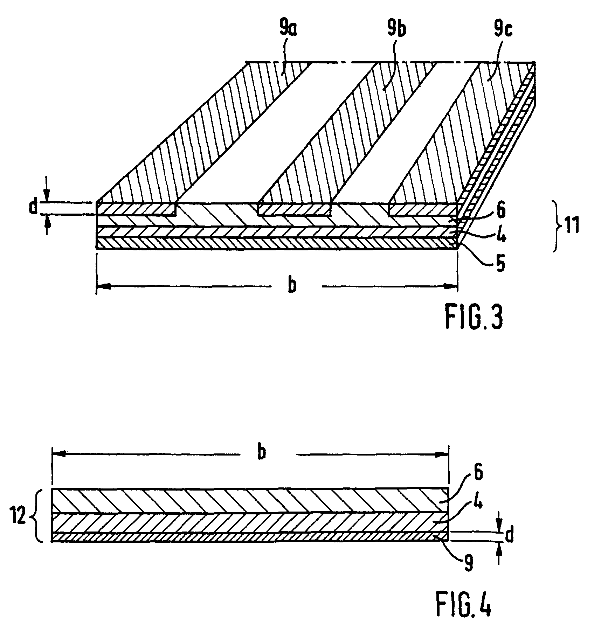

In der Fig. list ein Wabenkörper 1 dargestellt. Der Wabenkörper 1 besteht aus gestapelten und gewickelten hochtemperaturkorrosionsbeständigen Metallblechlagen. Der Wabenkörper 1 ist abwechselnd aus glatten und gewellten Blechlagen 2, 3 hergestellt. Die glatten und die gewellten Lagen 2, 3 weisen einen geschichteten Aufbau auf. Es ist aber auch möglich, einen Wabenkörper teilweise aus homogenen Metallblechlagen und teilweise aus geschichtetem Material herzustellen. Bei dem geschichteten Material sind auf beiden Seiten einer inneren Schicht 4 jeweils Schichten 5, 6 aufgebracht, die im wesentlichen aus Aluminium bestehen, wie dies aus der Fig. 2 ersichtlich ist. Das in der Fig. 2 dargestellte geschichtete Material weist, wie auch das in Fig. 3 und Fig. 4, eine Erscheinungsform auf wie sie vor der Wärmebehandlung ist.

Der Wabenkörper 1 weist eine Struktur zur Bildung von für ein Fluid durchströmbaren Kanälen 7 auf. Seine Metallblechlagen sind in einem Mantelrohr 8 angeordnet. Das Mantelrohr 8 weist vorzugsweise auf seiner Innenseite zumindest in Teilbereichen eine im wesentlichen aus Aluminium bestehende Schicht auf. Es kann aber auch allein oder zusätzlich mit üblichen Löttechniken mit den Metallblechlagen verbunden werden. Auch ist es möglich, einen Wabenkörper ohne Verwendung eines vorgefertigten Mantelrohres herzustellen, beispielweise indem eine glatte Metallblechlage um eine Struktur aus gestapelten und gewickelten Metallblechlagen herumgewickelt und mit sich selbst verlötet wird.

Fig. 2, Fig. 3 und Fig. 4 zeigen verschiedene Ausführungsformen für erfindungsgemäße Metallbleche. Diese Ausführungsformen sind jedoch lediglich Beispiele. Je nach Ort, Anzahl und Größe der gewünschten Lotverbindungen können Lotschichten, Lotstreifen oder andere Lotmuster auf einer oder beiden Seiten außen auf das geschichtete Material gewalzt werden. Es ist auch möglich, Lotmaterial in das Innere eines geschichteten Materials einzuwalzen. Vorteilhaft kann dies zum Beispiel sein, wenn Lotdraht zuerst teilweise plattgewalzt werden soll. Danach kann dann eine Schicht aufgewalzt werden, die aus weicherem Material als das Lotmaterial ist, so daß sich das Lotmaterial durch diese Schicht hindurchdrückt bis es an die Oberfläche des geschichteten Materials gelangt. Anders als bei den Ausführungsformen von Fig. 2 und Fig. 3, wo ausschließlich auf Aluminiumschichten 5, 6 gewalztes Lotmaterial 9; 9a, 9b, 9c dargestellt ist, kann das Lotmaterial 9; 9a, 9b, 9c auch außen auf eine Metallschicht aus einem anderem Material gewalzt werden, beispielsweise wie in Fig. 4 gezeigt auf eine außen liegende Chrom enthaltende Stahlschicht.

Wie Fig. 3 zeigt, ist es vielfach wünschenswert, das Lot nur in Streifen 9a, 9b, 9c an Teilbereichen der durch Aufwalzen entstandenen Verbundoberfläche zu plazieren. Dies kann auf einer oder beiden Seiten der Bleche erfolgen. Bevorzugt werden Streifen 9a, 9c an mindestens einem Randbereich der Bleche, die später zu stirnseitigen Lötverbindungen im herzustellenden Wabenkörper führen, da die Bleche eine Breite b haben, die der späteren axialen Länge des Wabenkörpers 1 entspricht. Anders als in den in Fig. 2 und Fig. 3 gezeigten Ausführungsbeispielen mit einer Lotmaterialschicht bzw. mit Lotmaterialstreifen ortsunabhängiger Dicke d kann das Lotmaterial auch eine ortsabhängige Dicke aufweisen. Beispielsweise können durch das Aufwalzen von Lotdraht und Lotpulver solche Ausführungen entstehen.

Das erfindungsgemäße Verfahren ist für Wabenkörper anwendbar, die ganz oder teilweise aus schichtartig aufgebauten Blechenlagen bestehen und führt kostengünstig zu mechanisch belastbaren hochtemperaturkorrosionsbeständigen Körpern, die besonders für Abgaskatalysatoren von Kraftfahrzeugen geeignet sind.

### Bezugszeichenliste:

- 1: Wabenkörper
- 2: gewellte Metallblechlage
- 3: glatte Metallblechlage
- 4: Chrom enthaltende Stahlschicht
- 5: Schicht, die im wesentlichen Aluminium enthält
- 6: Schicht, die im wesentlichen Aluminium enthält
- 7: Kanäle
- 8: Mantelrohr
- 9: Lotmaterialschicht
- 9a-9c: Lotmaterialstreifen
- 10-12: geschichtetes Material
- b: Breite der Bleche = axiale Länge des Wabenkörpers
- d: Dicke des Lotmaterials (senkrecht zur Verbundoberfläche)

## Patentansprüche

1. Verfahren zum Herstellen eines Wabenkörpers (1), bei dem Metallblechlagen (2, 3) unter Bildung von Berührungsstellen gestapelt und/oder gewickelt werden, wobei die Metallblechlagen zumindest teilweise eine Struktur zur Bildung von für ein Fluid durchströmbaren Kanälen (7) aufweisen und wobei zumindest ein Teil der Metallblechlagen (2, 3) zunächst aus einem durch Zusammenwalzen hergestellten, geschichteten Material (10; 11; 12) besteht, welches mindestens eine Schicht (4) aus Chrom enthaltendem Stahl und mindestens eine im wesentlichen Aluminium enthaltende Schicht (5, 6) aufweist, wobei die Schichten (4, 5, 6) bei einer späteren Wärmebehandlung weitgehend homogenisiert werden, dadurch gekennzeichnet,
daß auf mindestens eine Außenschicht (4, 5, 6) des geschichteten Materials (10; 11; 12) bei dessen Herstellung festes Lotmaterial (9; 9a, 9b, 9c) aufgewalzt wird, so daß sich bei der späteren Wärmebehandlung Lötverbindungen zumindest an Teilen der Berührungsstellen zwischen den Metallblechlagen (2, 3) und/oder an deren Berührungsstellen mit einem Mantelrohr (8) ergeben.

2. Verfahren nach Anspruch 1, dadurch gekennzeichnet, daß das Lotmaterial (9a, 9b, 9c) beim Aufwalzen nur an einem Teil der Verbundoberfläche des geschichteten Materials (10; 11; 12) zu liegen kommt, vorzugsweise als Lotstreifen (9a, 9c) an mindestens einem Randbereich.

3. Verfahren nach Anspruch 1 oder 2, dadurch gekennzeichnet, daß auf beide Außenschichten (5 und 6, bzw. 4 und 6) Lotmaterial (9; 9a, 9b, 9c) gewalzt wird.

4. Verfahren nach einem der Ansprüche 1, 2 oder 3, dadurch gekennzeichnet, daß das Lotmaterial (9; 9a, 9b, 9c) ein Nickelbasislot ist.

5. Verfahren nach Anspruch 4, dadurch gekennzeichnet, daß das Lotmaterial (9; 9a, 9b, 9c) zwischen 0,5 und 8 % Bor enthält, vorzugsweise etwa 3 bis 6 %.

6. Verfahren nach einem der vorhergehenden Ansprüche, dadurch gekennzeichnet,
daß die Metallblechlagen (2, 3) eine der axialen Länge des herzustellenden Wabenkörpers (1) entsprechende Breite (b) aufweisen und an mindestens einem, vorzugsweise an allen Randbereichen, die später im Wabenkörper (1) stirnseitig liegen, einen Streifen Lotmaterial (9a, 9c) aufweisen, der eine Breite von 2 bis 10 mm, vorzugsweise etwa 5 mm hat.

7. Verfahren nach einem der vorhergehenden Ansprüche, dadurch gekennzeichnet, daß die Wärmebehandlung zunächst in einem Temperaturbereich durchgeführt wird, bei dem das Aluminium in den Stahl diffundiert, das Lotmaterial aber noch nicht schmilzt, und nach weitgehender Homogenisierung des geschichteten Materials (10; 11; 12) die Temperatur erst auf Löttemperatur erhöht wird.

8. Metallblech aus einem durch Zusammenwalzen hergestellten, geschichteten Material (10; 11; 12) welches mindestens eine Schicht (4) aus Chrom enthaltendem Stahl und mindestens eine im wesentlichen Aluminium enthaltende Schicht (5, 6) aufweist,
dadurch gekennzeichnet,
daß auf mindestens eine Außenschicht (4, 5, 6) des geschichteten Materials (10; 11; 12) Lotmaterial (9; 9a, 9b, 9c) gewalzt ist, vorzugsweise so, daß die entstandene Verbundoberfläche weitgehend erhebungsfrei ist.

9. Metallblech nach Anspruch 8, dadurch gekennzeichnet, daß das Lotmaterial (9a, 9b, 9c) nur an einem Teil der Verbundoberfläche liegt, vorzugsweise streifenförmig an mindestens einem Randbereich der Verbundoberfläche.

10. Metallblech nach Anspruch 8 oder 9, dadurch gekennzeichnet, daß auf beide Außenschichten (5 und 6 bzw. 4 und 6) des geschichteten Materials (10; 11; 12) Lotmaterial (9; 9a, 9b, 9c) gewalzt ist.

11. Metallblech nach einem der Ansprüche 8, 9 oder 10, dadurch gekennzeichnet, daß das Lotmaterial (9; 9a, 9b, 9c) ein Nickelbasislot ist.

12. Metallblech nach Anspruch 11, dadurch gekennzeichnet, daß das Lotmaterial (9; 9a, 9b, 9c) zwischen 0,5 und 8 % Bor enthält, vorzugsweise etwa 3 bis 6 %.

13. Metallblech nach einem der Ansprüche 8, 9, 10, 11 oder 12, dadurch gekennzeichnet, daß das geschichtete Material (10; 11; 12) an mindestens einem Randbereich einer durch Aufwalzen von Lotmaterial entstandenen Verbundoberfläche, vorzugsweise an zwei einander gegenüberliegenden Randbereichen, einen Streifen Lotmaterial (9a, 9c) aufweist, der eine Breite von 2 bis 10 mm, vorzugsweise etwa 5 mm hat.

14. Metallblech nach einem der Ansprüche 8 bis 13, dadurch gekennzeichnet, daß das Lotmaterial überall eine Dicke d kleiner als 10 µ, vorzugsweise überall kleiner als 3 µ besitzt.

## Claims

1. A process for producing a honeycomb body (1), in which metal sheet layers (2, 3) are stacked and/or wound, forming contact locations, wherein the metal sheet layers at least in part have a structure for forming passages (7) through which a fluid can flow, and wherein at least a part of the sheet metal layers (2, 3) initially comprise a layered material (10; 11; 12) which is produced by being rolled together and which has at least one layer portion (4) of chromium-containing steel and at least one substantially aluminium-containing layer portion (5, 6), wherein the layer portions (4, 5. 6) are substantially homogenised in a subsequent heat treatment, characterised in that solid brazing material (9; 9a. 9b, 9c) is rolled on to at least one outer layer portion (4, 5, 6) of the layered material (10; 11; 12) in the production thereof so that in the subsequent heat treatment brazed connections are produced at least at parts of the contact locations between the metal sheet layers (2, 3) and/or at their contact locations with a tubular casing (8).

2. A process according to claim 1 characterised in that in the rolling-on operation the brazing material (9a, 9b, 9c) comes to lie only at a part of the composite surface of the layered material (10; 11; 12), preferably in the form of brazing strips (9a, 9c) at at least one edge region.

3. A process according to claim 1 or claim 2 characterised in that brazing material (9; 9a, 9b, 9c) is rolled on to both outer layer portions (5 and 6, 4 and 6 respectively).

4. A process according to one of claims 1, 2 and 3 characterised in that the brazing material (9; 9a, 9b, 9c) is a nickel-based brazing material.

5. A process according to claim 4 characterised in that the brazing material (9; 9a, 9b, 9c) contains between 0.5 and 8% boron, preferably about 3 to 6%.

6. A process according to one of the preceding claims characterised in that the metal sheet layers (2. 3) are of a width (b) corresponding to the axial length of the honeycomb body (1) to be produced and at at least one and preferably at all edge regions which are later at the ends in the honeycomb body (1) have a strip of brazing material (9a, 9c) which is of a width of 2 to 10 mm, preferably about 5 mm.

7. A process according to one of the preceding claims characterised in that the heat treatment is firstly carried out in a temperature range in which the aluminium diffuses into the steel but the brazing material does not yet melt and after substantial homogenisation of the layered material (10; 11; 12) the temperature is only then raised to brazing temperature.

8. A metal sheet comprising a layered material (10; 11; 12) which is produced by being rolled together and which has at least one layer portion (4) of chromium-containing steel and at least one substantially aluminium-containing layer portion (5, 6), characterised in that brazing material (9; 9a, 9b, 9c) is rolled on to at least one outer layer portion (4, 5, 6) of the layered material (10; 11; 12), preferably in such a way that the resulting composite surface is substantially free from raised portions.

9. A metal sheet according to claim 8 characterised in that the brazing material (9a, 9b, 9c) occurs only at a part of the composite surface, preferably in the form of a strip at at least one edge region of the composite surface.

10. A metal sheet according to claim 8 or claim 9 characterised in that brazing material (9; 9a, 9b, 9c) is rolled on to both outer layer portions (5 and 6, 4 and 6 respectively) of the layered material (10; 11; 12).

11. A metal sheet according to one of claims 8, 9 and 10 characterised in that the brazing material (9; 9a, 9b, 9c) is a nickel-based brazing material.

12. A metal sheet according to claim 11 characterised in that the brazing material (9; 9a, 9b, 9c) contains between 0.5 and 8% boron, preferably about 3 to 6%.

13. A metal sheet according to one of claims 8, 9, 10, 11 and 12 characterised in that at at least one edge region of a composite surface produced by rolling on brazing material, and preferably at two mutually opposite edge regions, the layered material (10; 11; 12) has a strip of brazing material (9a, 9c) which is of a width of 2 to 10 mm, preferably about 5 mm.

14. A metal sheet according to one of claims 8 to 13 characterised in that the brazing material is everywhere of a thickness d of less than 10 µ, preferably everywhere less than 3 µ.

## Revendications

1. Procédé de fabrication d'un corps à nid d'abeilles (1), dans lequel des couches de tôles métalliques (2, 3) sont empilées et/ou enroulées en formant des zones de contact, les couches de tôles métalliques présentant, du moins en partie, une structure servant à constituer des passages (7) pour la circulation d'un fluide, et dans lequel au moins une partie des couches de tôles métalliques (2, 3) consiste d'abord en un matériau en couches (10 ; 11 ; 12) fabriqué par laminage en commun, lequel matériau présente au moins une couche (4) en acier contenant du chrome et au moins une couche (5, 6) contenant essentiellement de l'aluminium, les couches (4, 5, 6) étant dans une large mesure homogénéisées par un traitement thermique ultérieur, caractérisé en ce que
sur au moins une couche extérieure (4, 5, 6) du matériau en couches (10 ; 11 ; 12), est appliqué par laminage, lors de la fabrication de celui-ci, du métal d'apport de brasage tendre (9 ; 9a, 9b, 9c) à l'état solide, de telle manière que, lors du traitement thermique ultérieur, il en résulte des assemblages brasés du moins au niveau de parties des zones de contact entre les couches de tôles métalliques (2, 3) et/ou au niveau des zones de contact de celles-ci avec un tube enveloppe (8).

2. Procédé selon la revendication 1, caractérisé en ce que le métal d'apport de brasage tendre (9a, 9b, 9c) n'est mis en place, lors de l'application par laminage, que sur une partie de la surface de la structure composite du matériau en couches (10 ; 11 ; 12), de préférence sous la forme de rubans de métal d'apport (9a, 9c) au niveau d'au moins une zone de bord.

3. Procédé selon la revendication 1 ou 2, caractérisé en ce que le métal d'apport de brasage tendre (9 ; 9a, 9b, 9c) est appliqué par laminage sur les deux couches extérieures (5 et 6 ou bien 4 et 6).

4. Procédé selon l'une des revendications 1, 2 ou 3, caractérisé en ce que le métal d'apport de brasage tendre (9 ; 9a, 9b, 9c) est un métal d'apport à base de nickel.

5. Procédé selon la revendication 4, caractérisé en ce que le métal d'apport de brasage tendre (9 ; 9a, 9b, 9c) contient du bore selon une teneur comprise entre 0,5 et 8 % et, de préférence, d'environ 3 à 6 %.

6. Procédé selon l'une des revendications précédentes, caractérisé en ce que les couches de tôles métalliques (2, 3) présentent une largeur (b) qui correspond à la longueur axiale du corps à nid d'abeilles (1) à fabriquer et comportent, au niveau d'au moins une zone de bord et, de préférence au niveau de toutes les zones de bord, qui se trouveront ultérieurement de face dans le corps à nid d'abeilles (1), un ruban de métal d'apport de brasage (9a, 9c), qui a une largeur comprise entre 2 et 10 mm et, de préférence, d'environ 5 mm.

7. Procédé selon l'une des revendications précédentes, caractérisé en ce que le traitement thermique est effectué tout d'abord dans une plage de températures, dans laquelle l'aluminium diffuse dans l'acier, mais dans laquelle le métal d'apport de brasage tendre ne fond pas encore et en ce que, après une large homogénéisation du matériau en couches (10 ; 11 ; 12), la température est alors élevée jusqu'à la température de brasage.

8. Tôle métallique consistant en un matériau en couches (10 ; 11 ; 12) fabriqué par laminage en commun, lequel matériau présente au moins une couche (4) en acier contenant du chrome et au moins une couche (5, 6) contenant essentiellement de l'aluminium, caractérisée en ce que, sur au moins une couche extérieure (4, 5, 6) du matériau en couches (10 ; 11 ; 12), est appliqué par laminage, lors de la fabrication de celui-ci, du métal d'apport de brasage tendre (9 ; 9a, 9b, 9c), de préférence de telle manière que la surface composite ainsi obtenue soit, dans une large mesure, exempte d'éminences.

9. Tôle métallique selon la revendication 8, caractérisée en ce que le métal d'apport de brasage tendre (9a, 9b, 9c) n'est mis en place que sur une partie de la surface de la structure composite, de préférence sous la forme de rubans au niveau d'au moins une zone de bord de la surface de la structure composite.

10. Tôle métallique selon la revendication 8 ou 9, caractérisée en ce que le métal d'apport de brasage tendre (9 ; 9a, 9b, 9c) est appliqué par laminage sur les deux couches extérieures (5 et 6 ou bien 4 et 6) du matériau en couches (10 ; 11 ; 12).

11. Tôle métallique selon l'une des revendications 8, 9 ou 10, caractérisée en ce que le métal d'apport de brasage tendre (9 ; 9a, 9b, 9c) est un métal d'apport à base de nickel.

12. Tôle métallique selon la revendication 11, caractérisée en ce que le métal d'apport de brasage tendre (9 ; 9a, 9b, 9c) contient du bore selon une teneur comprise entre 0,5 et 8 % et, de préférence, d'environ 3 à 6 %.

13. Tôle métallique selon l'une des revendications 8, 9, 10, 11 ou 12, caractérisée en ce que le matériau en couches (10 ; 11 ; 12) présente, au niveau d'au moins une zone de bord d'une surface composite résultant de l'application par laminage de métal d'apport de brasage et, de préférence au niveau de deux zones de bord opposées l'une à l'autre, un ruban de métal d'apport de brasage (9a, 9c), qui a une largeur comprise entre 2 et 10 mm et, de préférence, d'environ 5 mm.

14. Tôle métallique selon l'une des revendications 8 à 13, caractérisée en ce que le métal d'apport de brasage présente partout une épaisseur d inférieure à 10 µ et, de préférence, inférieure partout à 3 µ.
